# EUROPÄISCHE PATENTSCHRIFT

(11) **EP 3 554 320 B1**
(45) Veröffentlichungstag und Bekanntmachung des Hinweises auf die Patenterteilung: **29.07.2020**
(21) Anmeldenummer: 17798228.7
(22) Anmeldetag: 16.11.2017
(51) Int. Cl.: A47J 31/60

(54) **GETRÄNKEVOLLAUTOMAT FÜR FRISCHGEBRÜHTE HEISSGETRÄNKE**
FULLY AUTOMATIC BEVERAGE MACHINE FOR FRESHLY BREWED HOT BEVERAGES
DISTRIBUTEUR DE BOISSONS ENTIEREMENT AUTOMATIQUE POUR BOISSONS CHAUDES FRAICHEMENT INFUSEES

(30) Priorität: 16.12.2016 DE 102016124681
(43) Veröffentlichungstag der Anmeldung: 23.10.2019
(73) Patentinhaber: FRANKE Kaffeemaschinen AG, 4663 Aarburg (CH)
(72) Erfinder: VETTERLI, Heinz, 8855 Wangen (CH)
(74) Vertreter: Lemcke, Brommer & Partner Patentanwälte Partnerschaft mbB
(86) Internationale Anmeldenummer: PCT/EP2017/079475
(87) Internationale Veröffentlichungsnummer: WO 2018/108437

(56) Entgegenhaltungen:
- EP-A1- 2 363 051
- EP-A1- 3 078 310
- WO-A1-2004/058019
- US-A1- 2004 118 291

## Beschreibung

Die vorliegende Erfindung betrifft einen Getränkevollautomaten zum Zubereiten frischgebrühter Heißgetränke, insbesondere Kaffeegetränke, mit mindestens einem Heißwassererzeuger, mit einer Brühvorrichtung, der Heißwasser aus dem Heißwassererzeuger zuführbar ist, mit einer Wasserpumpe, die Trinkwasser aus einer Trinkwasserzuleitung zu dem Heißwassererzeuger fördert, und mit einem Durchflussmesser zur Volumenbestimmung von der Wasserpumpe geförderten Trinkwassers.

Im Stand der Technik sind Kaffeevollautomaten bekannt, welche auf Knopfdruck portionsweise frischgebrühte Kaffeegetränke zubereiten. Das hierfür erforderliche Heißwasser wird üblicherweise in einem Heißwasserboiler vorgehalten, sodass eine lange Aufheizzeit entfällt.

Bekannt ist auch, dass bei derartigen Kaffeevollautomaten von Zeit zu Zeit eine Entkalkung des Heißwassererzeugers durchgeführt werden muss. Hierzu sind beispielsweise Lösungen bekannt wie in der WO 2013/023963 A1 oder der EP 2705784 A1, bei denen eine Kartusche mit einem wasserlöslichen Entkalkungsmittel eingesetzt bzw. an die Vorrichtung angeschlossen wird, um einen Entkalkungsvorgang durchzuführen. Bei der CH 709738 wird an die Kaffeemaschine eine Entkalkungsmittel-Applikationsvorrichtung mit einer in einem Behälter mit veränderlichem Volumen aufgenommenen Entkalkungslösung angeschlossen.

Aus der DE 10 2013 106 148 A1 ist ein Getränkeautomat bekannt mit einer Wasserpumpe, einer Heizeinrichtung zum Erhitzen von Wasser, einer Brühkammer, der Heißwasser aus dem Heißwassererzeuger zuführbar ist, und mit einem Durchflussmesser, um die von der Pumpe geförderte Wassermenge zu bestimmen. An der Frischwasserzuleitung kann eine Entkalkungsvorrichtung zugeschaltet werden, mit der dem von der Wasserpumpe angesaugten Frischwasser ein Entkalkungsmittel zugesetzt werden kann. Die Dosierung des Entkalkungsmittels soll über eine Reduzierung der Förderleistung der Wasserpumpe eingestellt werden. Die Dosierung des Entkalkungsmittels hängt somit von der Fließgeschwindigkeit des Frischwassers ab. Da diese aber wiederum vom Verkalkungszustand des Heißwasserbereiters abhängen kann, ist die Dosierung des Entkalkungsmittels ungenau.

Die US 2004/0118291 A1 beschreibt einen Kaffeevollautomaten mit einem eigenständigen Reinigungssystem. Das Reinigungssystem besitzt einen Mischbehälter zum Anmischen einer Entkalkungsmittellösung, eine separate Wasserpumpe zum Fördern von Trinkwasser von einer Wasserzuleitung in den Mischbehälter, einen Aufnahmeraum für einen Vorratsbehälter für flüssiges Entkalkerkonzentrat sowie eine Dosierpumpe zur dosierten Förderung von Entkalkerkonzentrat aus dem Vorratsbehälter in den Mischbehälter. Hierbei ergeben sich lange Strömungswege.

Die vorliegende Erfindung hat sich zur Aufgabe gesetzt, einen Getränkevollautomaten zum Zubereiten frischgebrühter Heißgetränke, insbesondere Kaffeegetränke, anzugeben, mit der Heißgetränke schnell und zuverlässig zubereitet werden können, die wartungsarm und reparaturunanfällig ist und die für einen Benutzer bzw. ein Bedienpersonal einfach und betriebssicher zu bedienen ist.

Die vorliegende Erfindung verwendet daher in Abkehr von existierenden Kaffeevollautomaten mit einem Boiler zur Heißwasserzubereitung einen leichten und kompakten Durchlauferhitzer zur Heißwasserbereitung. Ein entsprechender Durchlauferhitzer, der im Rahmen der vorliegenden Erfindung Anwendung finden kann, ist zum Beispiel in der WO 2013/189869 A1 angegeben, auf die hier zur Vermeidung unnötiger Wiederholungen vollinhaltlich Bezug genommen wird.

Die Erfindung basiert jedoch auf der Erkenntnis, dass bei einem im Rahmen der vorliegenden Erfindung geeigneten Durchlauferhitzer aufgrund der zur schnellen Erwärmung des Wassers erforderlichen hohen Temperaturen und der engen, aber langen Strömungswege im Durchlauferhitzer dieser anfällig für Verkalkung ist. Im Rahmen der vorliegenden Erfindung ist daher vorgesehen, dass der Getränkevollautomat mit einem Entkalkungssystem zum automatischen Entkalken des Durchlauferhitzers ausgerüstet ist. Auf diese Weise kann, sobald dies erforderlich ist, zu beliebiger Zeit und ohne größeren Aufwand eine Entkalkung des Durchlauferhitzers durchgeführt werden. In der Regel geschieht dies zu Beginn oder nach Beendigung eines Betriebs durch den Bediener auf einen einfachen Knopfdruck hin. Der Getränkevollautomat führt dann, ohne dass weitere Bedienschritte wie etwa das Einsetzen einer Entkalkerkartusche oder Ähnliches erforderlich wäre, die notwendigen Schritte zum Entkalken des Durchlauferhitzers durch.

Hierzu umfasst das Entkalkungssystem des erfindungsgemäßen Getränkevollautomaten einen Mischbehälter zum Anmischen einer Entkalkungsmittellösung, einen Aufnahmeraum für einen Vorratsbehälter für flüssiges Entkalkerkonzentrat sowie eine Dosierpumpe zum dosierten Fördern von Entkalkerkonzentrat aus dem Vorratsbehälter in den Mischbehälter. In dem Mischbehälter wird somit bei Bedarf, also wenn ein Entkalkungsvorgang durchgeführt werden soll, aus dem flüssigen Entkalkerkonzentrat, welches von dem Getränkevollautomaten selbsttätig über die Dosierpumpe aus dem Vorratsbehälter in den Mischbehälter gefördert wird, und Wasser die Entkalkungsmittellösung gemischt.

Die Verwendung eines flüssigen Entkalkerkonzentrats hat den Vorteil, dass in dem Getränkevollautomaten eine Konzentratmenge für eine Vielzahl von Entkalkungsvorgängen bevorratet werden kann, sodass ein Auswechseln oder Nachfüllen des Vorratsbehälters auch bei häufigen Entkalkungsvorgängen nur in größeren Zeitabständen erforderlich ist. Dies vermindert den notwendigen Wartungsaufwand erheblich und ermöglicht es dem Bediener ohne technische Kenntnisse die Entkalkung regelmäßig durchzuführen. Zudem lässt sich ein flüssiges Entkalkerkonzentrat einfach und betriebssicher über eine Dosierpumpe dosieren, sodass die Entkalkungsmittellösung automatisiert und in stets der richtigen, gewünschten Dosierung gemischt werden kann.

Außerdem umfasst der Getränkevollautomat eine Wasserpumpe, die Trinkwasser aus einer Trinkwasserzuleitung, beispielsweise einem Wasseranschluss oder einem in den Getränkevollautomaten eingesetzten Wasserbehälter, entnimmt und zu dem Heißwassererzeuger fördert. Außerdem ist ein Durchflussmesser zur Volumenbestimmung von mittels der Wasserpumpe gefördertem Trinkwasser vorgesehen. Ein solcher Durchflussmesser zur Volumenbestimmung bietet im Rahmen der vorliegenden Erfindung gleich in mehrerlei Hinsicht Vorteile: Einerseits kann über den Durchflussmesser ein Frischwasservolumen abgemessen werden, welches über die Wasserpumpe in den Mischbehälter eingefüllt wird, um die Entkalkungsmittellösung zu mischen. Andererseits lässt sich mithilfe des Durchflussmessers eine Durchflussrate, also die Volumenmenge pro Zeiteinheit, bestimmen, die im Betrieb des Getränkevollautomaten durch den Durchlauferhitzer fließt. Hieraus lässt sich ein Verkalkungszustand des Durchlauferhitzers schlussfolgern, sodass rechtzeitig eine Meldung erzeugt werden kann, dass ein automatischer Entkalkungsvorgang erforderlich ist und bei Gelegenheit gestartet werden sollte. Daneben dient der Durchflussmesser natürlich auch dazu, die Frischwasserportionen bei der Zubereitung unterschiedlicher Heißgetränke abzumessen.

Erfindungsgemäß ist weiter vorgesehen, dass die Wasserpumpe saugseitig über ein erstes Wegeventil umschaltbar mit dem Mischbehälter verbindbar ist, in welchem die Entkalkungsmittellösung aufgenommen bzw. angemischt ist. Somit kann in der umgeschalteten Ventilstellung des ersten Wegeventils die Entkalkungsmittellösung aus dem Mischbehälter über die Wasserpumpe zu dem Heißwassererzeuger gefördert werden. Außerdem hinaus ist die Wasserpumpe druckseitig über ein zweites Wegeventil umschaltbar mit einer Wasserzuleitung des Mischbehälters verbindbar ist. Zum Anmischen einer Entkalkungsmittellösung in dem Mischbehälter kann somit in der umgeschalteten Ventilstellung des zweiten Wegeventils von der Wasserpumpe Trinkwasser zu dem Mischbehälter gefördert werden.

Zweckmäßigerweise besitzt der Getränkevollautomat eine Steuerungsvorrichtung, die aus Messwerten des Durchflussmessers auf einen Verkalkungszustand des Heißwassererzeugers schließt und bei Erreichen eines vorgegebenen Wertes, insbesondere für eine maximale Durchlaufzeit oder eine Mindestdurchflussrate, eine Meldung generiert, dass ein automatischer Entkalkungsvorgang durchgeführt werden sollte. Ein Bediener des Getränkevollautomaten weiß somit, dass er bei nächster Gelegenheit einen Entkalkungsvorgang starten sollte. Dennoch kann der normale Betrieb des Getränkevollautomaten zunächst in gewohnter Weise und ohne nennenswerte Beeinträchtigungen fortgesetzt werden.

Im Rahmen der vorliegenden Erfindung kann darüber hinaus vorgesehen werden, dass in Flussrichtung hinter dem Heißwassererzeuger ein drittes Wegeventil angeordnet ist, mit dem der Fluidfluss von dem Heißwassererzeuger in eine Abwasserleitung oder einen Sammelbehälter für Abwasser geleitet werden kann. Im Rahmen eines automatischen Entkalkungsvorgangs wird dieses dritte Wegeventil in eine Schaltstellung gebracht, in der die Entkalkungsmittellösung nach Durchströmen des Durchlauferhitzers nicht zu der Brühvorrichtung und von dort weiter zu einem Getränkeauslass geleitet wird, sondern direkt in eine Abwasserleitung oder einen entsprechenden Sammelbehälter gelangt. Indem die Entkalkungsmittellösung nicht zum normalen Getränkeauslauf ausgegeben wird, wird eine versehentliche Fehlbedienung vermieden, die z.B. zu einer Ausgabe von Entkalkungsmittellösung in ein Getränkebehältnis eines Kunden führen könnte.

Zur vollautomatischen Durchführung von Entkalkungsvorgängen ist im Rahmen der vorliegenden Erfindung eine programmierbare Steuerungsvorrichtung sinnvoll und vorteilhaft, die ausgebildet bzw. programmiert ist, zur Durchführung eines automatischen Entkalkungsvorgang die Dosierpumpe anzusteuern, um eine vorbestimmte Menge an Entkalkerkonzentrat aus dem Vorratsbehälter in den Mischbehälter zu fördern; die weiter programmiert ist, das zweite Wegeventil umzuschalten, um die Wasserpumpe mit der Wasserzuleitung des Mischbehälters zu verbinden und die Wasserpumpe anzusteuern, um eine vorgebbare Menge an Trinkwasser in den Mischbehälter zu fördern; und die weiter programmiert ist, das erste Wegeventil umzuschalten, um die Wasserpumpe saugseitig mit der Entnahmeleitung des Mischbehälters zu verbinden und die Entkalkungsmittellösung aus dem Mischbehälter zu dem Heißwassererzeuger zu fördern.

Im Rahmen der vorliegenden Erfindung ist außerdem ein Verfahren zum automatisierten Entkalken eines Heißwassererzeugers in einem Getränkevollautomaten vorgesehen, der zum Zubereiten frischgebrühter Heißgetränke dient. Zur Durchführung eines automatisierten Entkalkungsvorgangs wird mittels einer Dosierpumpe eine vorbestimmte Menge an Entkalkerkonzentrat aus einem Vorratsbehälter in einen Mischbehälter gefördert. Anschließend wird eine Wasserpumpe des Getränkevollautomaten mit einer Wasserzuleitung des Mischbehälters verbunden und mittels der Wasserpumpe eine vorgebbare Menge an Trinkwasser in den Mischbehälter gefördert. Schließlich wird die Wasserpumpe saugseitig mit dem Mischbehälter und druckseitig wieder mit dem Heißwassererzeuger verbunden und mittels der Wasserpumpe die Entkalkungsmittellösung aus dem Mischbehälter zu dem Heißwassererzeuger gefördert.

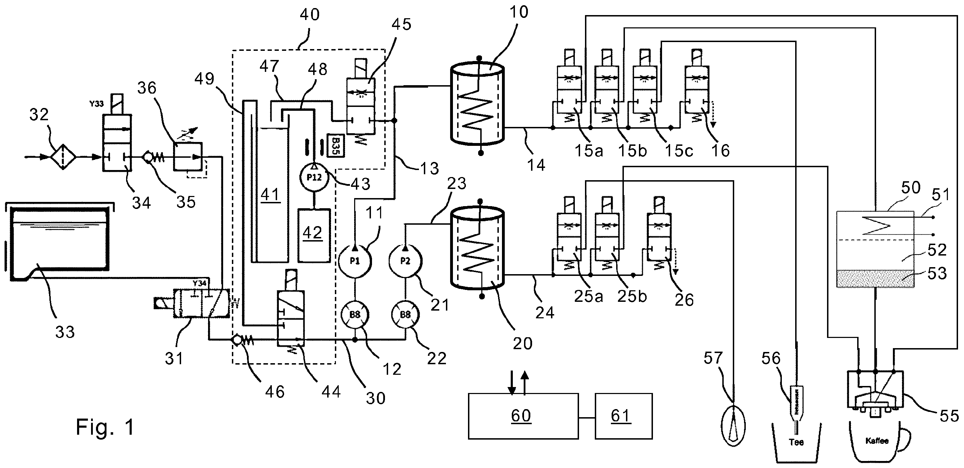

Weitere Vorteile und Eigenschaften der vorliegenden Erfindung ergeben sich aus der nachfolgenden Beschreibung eines Ausführungsbeispieles anhand der einzigen Figur. Diese zeigt ein Wasserflussschema eines Getränkevollautomaten mit zwei Durchlauferhitzern und einem integrierten Entkalkungssystem zum automatischen Entkalken der Durchlauferhitzer.

In der Figur ist in einem sogenannten Wasserlaufschema der Aufbau einer Vorrichtung zum Zubereiten von Heißgetränken gezeigt, wie er etwa bei einem Kaffeevollautomaten zum Einsatz kommt. Zur Erzeugung von Heißwasser, mit dem Heißgetränke zubereitet werden, dient ein Durchlauferhitzer 10. In Wasserflussrichtung stromaufwärts des Durchlauferhitzers 10 befinden sich eine Wasserpumpe 11 und ein Durchflussmesser 12, die über eine Leitung 13 mit dem Durchlauferhitzer 10 verbunden sind. Am Heißwasserausgang des Durchlauferhitzers 10 sind über eine Leitung 14 mehrere Wegeventile 15a, 15b, 15c und 16 angeschlossen.

Zusätzlich zu dem zur Heißwasserbereitung vorgesehenen Durchlauferhitzer 10 besitzt die Vorrichtung einen zweiten Durchlauferhitzer 20, der zur Erzeugung von Dampf dient, der ebenfalls zur Zubereitung von Heißgetränken, beispielsweise zur Nacherwärmung oder zum Aufschäumen von Milch oder anderen Getränken dienen kann. Auch der zweite Durchlauferhitzer 20, der hier zur Erzeugung von Dampf dient, wird er im Sinne der vorliegenden Erfindung ebenfalls als Heißwassererzeuger im weiteren Sinne verstanden.

Stromaufwärts des zweiten Durchlauferhitzers 20 befinden sich ebenfalls eine Wasserpumpe 21 und ein Durchflussmesser 22, die über eine Leitung 23 mit dem Zulauf des Durchlauferhitzers 20 verbunden sind. Am Heißwasser- bzw. Dampfausgang des Durchlauferhitzers 20 sind über eine Leitung 24 verschiedene Wegeventile 25a, 25b, 26 angeschlossen.

Die beiden Durchflussmesser 12, 22 sind im Ausführungsbeispiel jeweils vor den zugehörigen Pumpen 11, 21 angeordnet. Es wäre jedoch in gleicher Weise möglich, die Durchflussmesser 12, 22 in Flussrichtung hinter den zugehörigen Wasserpumpen 11, 21 anzuordnen. Saugseitig sind die beiden Wasserpumpen 11, 21 über eine Trinkwasserzuleitung 30 und ein optionales Umschaltventil 31 mit einem Trinkwasseranschluss 32 des öffentlichen Leitungsnetzes oder einem an oder in dem Gerät vorgesehenen Wassertank 33 verbunden. Im Falle eines Anschlusses an ein öffentliches Leitungsnetz 32 sind in der Zuleitung ein Absperrventil 34, ein Rückschlagventil 35 sowie ein Druckminderer 36 vorgesehen.

Die Wasserpumpe 11 fördert Trinkwasser aus der angeschlossenen Trinkwasserzuleitung 30 über die Leitung 13 zu dem Durchlauferhitzer 10 von wo aus das Heißwasser über das Wegeventil 15b zu einer Brühgruppe 50 gefördert werden kann. Die Brühgruppe 50 umfasst in an sich bekannter Weise eine Heizung 51, mit der das zugeführte Heißwasser zum Sieden gebracht oder die Brühgruppe vorgewärmt werden kann, und eine Brühkammer 52, in die portioniertes, frisch gemahlenes Kaffeepulver 53 eingefüllt wird. Eine Brühgruppe, die im Rahmen der vorliegenden Erfindung eingesetzt werden kann, ist beispielsweise in der EP 2561778 A1 beschrieben, auf die, um unnötige Wiederholungen zu vermeiden, hiermit vollinhaltlich Bezug genommen wird.

Die Brühgruppe 50 ist so ausgestaltet, dass sie geöffnet werden kann, um eine portionierte Menge Kaffeepulver einzufüllen, welches zuvor in einer Mühle des Kaffeevollautomaten portionsweise frisch gemahlen wurde. Außerdem kann bei geöffneter Brühgruppe nach dem Brühvorgang der verbleibende Kaffeesatz in einen Tresterbehälter ausgeworfen werden. Die Brühgruppe weist außerdem einen beweglichen Kolben auf (nicht dargestellt), der das eingefüllte Kaffeepulver gegen ein in der Brühkammer befindliches Brühsieb verdichtet. Nach Zurückfahren des Kolbens kann das so verdichtete Kaffeepulver von dem unter dem Druck der Pumpe 11 stehenden Brühwasser aus dem Durchlauferhitzer 10 durchströmt werden. Der fertig gebrühte Kaffee wird von der Brühgruppe 50 über eine Auslassleitung zu einem Auslauf 55 für Kaffeegetränke geleitet. Über das Wegeventil 15a kann Heißwasser direkt zu dem Auslauf 55 geleitet werden, beispielsweise zu Reinigungszwecken oder zum Zubereiten von Instantgetränken. Außerdem kann Heißwasser über das Wegeventil 15c auch zu einem separaten Heißwasserauslass 56 geleitet werden, der beispielsweise zur Zubereitung von Tee dient.

Von dem zweiten Durchlauferhitzer 20 erzeugter Dampf kann über das Wegeventil 25a entweder zu einer sogenannten Dampflanze 57 geleitet werden, um beispielsweise Milch aufzuschäumen, außerdem kann Dampf über das Wegeventil 25b auch zu dem Auslauf 55 geleitet werden, um zum Beispiel über eine separate Leitung (nicht gezeigt) zugeleitete Milch zu erwärmen oder aufzuschäumen.

Die Wegeventile 16 und 26 dienen dazu, den Heißwasserausgang des Durchlauferhitzers 10 bzw. des Durchlauferhitzers 20 mit einer sogenannten Drainage, also einer Abwasserleitung oder einem Sammelbehälter für Abwasser zu verbinden. Dies ist vor allem zum Zwecke einer Entkalkung des zugehörigen Durchlauferhitzers 10, 20 notwendig, um die durch die Durchlauferhitzer 10, 20 geleitete Entkalkerlösung abzuleiten.

Zur Entkalkung der Durchlauferhitzer 10, 20 dient ein integriertes Entkalkungssystem 40, welches im Folgenden erläutert wird. Das Entkalkungssystem 40 umfasst einen Mischbehälter 41, einen Vorratsbehälter 42 für flüssiges Entkalkerkonzentrat und eine Dosierpumpe 43. Die saugseitig der Wasserpumpen 11, 21 befindliche gemeinsame Trinkwasserzuleitung 30 kann über einen Umschaltventil 44 mit einer bis zum Boden des Mischbehälters 41 reichenden Ansaugleitung 49 verbunden werden, um zum Zwecke einer Entkalkung eine Entkalkungsmittellösung aus dem Mischbehälter 41 anzusaugen und zu den Durchlauferhitzern 10, 20 zu fördern. Zuvor wird die Entkalkungsmittellösung im Mischbehälter 41 angemischt, indem über die Dosierpumpe 43 eine dosierbare Menge des Entkalkerkonzentrats über die Zuleitung 48 in den Mischbehälter gefördert wird.

Über ein Wegeventil 45, welches mit der druckseitig an die Pumpe 11 angeschlossenen Zuleitung 13 verbunden ist, kann mittels der Wasserpumpe 11 Frischwasser über die Zuleitung 47 in dem Mischbehälter eingefüllt werden. Die Menge des eingefüllten Frischwassers lässt sich hierbei mithilfe des Durchflussmessers 12 bestimmen, sodass das Ventil 45, nachdem eine vorbestimmte Wassermenge in den Mischbehälter 41 eingefüllt wurde, geschlossen werden kann.

Nachdem die Entkalkungsmittellösung im Mischbehälter 41 angemischt wurde, kann das über das Ventil 44 die Zuleitung 30 mit der Ansaugleitung 49 verbunden werden. Anschließend wird das Drainageventil 16 geöffnet und über die Wasserpumpe 11 die Entkalkungsmittellösung aus dem Mischbehälter 41 durch den Durchlauferhitzer 10 gefördert. Anschließend wird das Umschaltventil 44 wieder in die Betriebsstellung zurückgeschaltet, in der die Zuleitung 30 mit dem öffentlichen Wasseranschluss 32 oder dem Wassertank 33 verbunden ist und mittels der Wasserpumpe 11 der Durchlauferhitzer 10 nochmals mit Frischwasser durchgespült. Ein Rückschlagventil 46 verhindert, dass gegebenenfalls noch in der Zuleitung 30 befindliche Entkalkungsmittellösung in den Frischwassertank 33 zurückströmen kann. In gleicher Weise kann auch der Durchlauferhitzer 20 entkalkt und gereinigt werden, indem über die Wasserpumpe 21 Entkalkungsmittellösung aus dem Mischbehälter 41 durch den Durchlauferhitzer 20 und über das Drainageventil 26 in den Auslauf gefördert wird.

Auch wenn der Durchlauferhitzer 20 im vorliegenden Ausführungsbeispiel zur Erzeugung von Dampf dient, wird er im Sinne der vorliegenden Erfindung ebenfalls als Heißwassererzeuger im weiteren Sinne verstanden. Es ist offensichtlich, dass das Wegeventil 45 des Entkalkungssystems 40 statt über die Leitung 13 mit der Wasserpumpe 11 auch über die Leitung 23 mit der Wasserpumpe 21 verbunden sein kann. Bei den Durchlauferhitzern 10, 20, die im vorliegenden Ausführungsbeispiel zum Einsatz kommen, handelt es sich um kompakte Durchlauferhitzer in Form sogenannter Heizpatronen. Diese bestehen aus einem dünnwandigen, mit elektrischen Heizdrähten versehenem zylindrischen Innenkörper, dessen Mantelfläche außenseitig mit einer wendelförmig verlaufenden Nut versehen ist, die nach außen hin von einem äußeren zylindrischen Mantel begrenzt wird und so einen Strömungsweg für das zu erhitzende Leitungswasser bildet. Eine solche Heizpatrone ist beispielsweise in der Schrift WO 2013/189869 A1 beschrieben, auf die zur Vermeidung unnötiger Wiederholungen hiermit vollinhaltlich Bezug genommen wird.

Der im Ausführungsbeispiel beschriebene Kaffeevollautomat besitzt außerdem eine programmierbare Steuerung 60 und eine mit der Steuerung 60 verbundene Benutzerschnittstelle 61, beispielsweise in Form eines berührungsempfindlichen Displays oder einer anderweitigen Anzeige- und Eingabeeinheit. Über die Steuerung 60 werden die Funktionen der Wasserpumpen 11, 21, sämtlicher Wegeventile, die Aktivierung der Durchlauferhitzer 10, 20 sowie des Entkalkungssystems 40 und dessen Dosierpumpe 43 angesteuert. Die Steuerung liest auch die Messwerte den Durchflussmessern 12, 22 aus. Über die Steuerung 60 kann somit sowohl im normalen Betrieb die Zubereitung von Kaffeegetränken oder anderen Heißgetränken gesteuert werden, als auch eine Entkalkung der Durchlauferhitzer 10, 20 mittels des Entkalkungssystems 40 durchgeführt werden. Über die beiden Durchflussmesser 12, 22 kann die Steuerung 60 feststellen, wie lange es dauert, bis eine vorgebbare Menge an Wasser durch die zugehörigen Durchlauferhitzer 10 bzw. 20 geflossen ist. Hieraus lässt sich der Entkalkungszustand der Durchlauferhitzer 10, 20 abschätzen, sodass die Steuerung über die grafische Benutzerschnittstelle 61 eine Meldung erzeugen kann, dass ein automatischer Entkalkungsvorgang erforderlich wäre. Ein Benutzer kann dann über entsprechende Eingabemittel an der Benutzerschnittstelle 61 den automatischen Entkalkungsvorgang auslösen bzw. aktivieren.

Zur Durchführung des Entkalkungsvorganges wird wie bereits beschrieben zunächst eine dosierte Menge Entkalkerkonzentrat aus dem Vorratsbehälter 42 in den Mischbehälter 41 gefördert und dann über das Wegeventil 45 der Mischbehälter 41 mit Frischwasser aufgefüllt. Die Entkalkungsmittellösung 41 wird dann durch den betreffenden Durchlauferhitzer 10 bzw. 20 geleitet, um diesen zu entkalken. Anschließend wird mit Frischwasser nachgespült. Der Kaffeevollautomat ist dann wieder betriebsbereit.

Als Entkalkerkonzentrat können z.B. Citronensäure, Apfelelsäure oder Weinsäure in Form einer konzentrierten Lösung eingesetzt werden. Das Entkalkerkonzentrat kann entweder in Einwegverpackungen abgefüllt oder in einen befüllbaren Vorratsbehälter bei Bedarf nachgefüllt werden. Hierbei kann der Vorratsbehälter fest in dem Getränkevollautomaten verbaut sein, vorzugsweise jedoch zum Befüllen oder Austausch entnehmbar sein. Im Falle eines Einwegbehälters kann dieser beispielsweise geöffnet bzw. mit der Dosierpumpe verbunden werden, indem in ihn mit einer Entnahmelanze oder einem Dorn eingestochen wird.

## Patentansprüche

1. Getränkevollautomat zum Zubereiten frisch gebrühter Heißgetränke, mit mindestens einem Heißwassererzeuger (10, 20), mit einer Brühvorrichtung (50), der Heißwasser aus dem Heißwassererzeuger (10, 20) zuführbar ist, mit einer Wasserpumpe (11, 21), die Trinkwasser aus einer Trinkwasserzuleitung (30) zu dem Heißwassererzeuger (10, 20) fördert, und mit einem Durchflussmesser (12, 22) zur Volumenbestimmung von der Wasserpumpe (11, 21) geförderten Trinkwassers, wobei es sich bei dem Heißwassererzeuger (10, 20) um einen Durchlauferhitzer handelt und der Getränkezubereitungsautomat mit einem Entkalkungssystem (40) zum automatischen Entkalken des Durchlauferhitzers (10, 20) ausgerüstet ist,
wobei das Entkalkungssystem (40) einen Mischbehälter (41) zum Anmischen einer Entkalkungsmittellösung, einen Aufnahmeraum für einen Vorratsbehälter (42) für flüssiges Entkalkerkonzentrat sowie eine Dosierpumpe (43) zur dosierten Förderung von Entkalkerkonzentrat aus dem Vorratsbehälter (42) in den Mischbehälter (41) umfasst, in welchem aus Entkalkerkonzentrat und Wasser die Entkalkungsmittellösung gemischt wird,
die Wasserpumpe (11, 21) saugseitig über ein erstes Wegeventil (44) umschaltbar mit einer Entnahmeleitung (49) des Mischbehälters (41) verbindbar ist, um in der umgeschalteten Ventilstellung des ersten Wegeventils (44) Entkalkungsmittellösung aus dem Mischbehälter (41) zu dem Heißwassererzeuger (10, 20) zu fördern und
die Wasserpumpe (11) druckseitig über ein zweites Wegeventil (45) umschaltbar mit einer Wasserzuleitung (47) des Mischbehälters (41) verbindbar ist, um in der umgeschalteten Ventilstellung des zweiten Wegeventils (45) zum Anmischen der Entkalkungsmittellösung Trinkwasser zu dem Mischbehälter (41) zu fördern.

2. Getränkevollautomat nach Anspruch 1, mit einer Steuervorrichtung, die ausgebildet ist, die Wasserpumpe (11, 21) anzusteuern und über den Durchflussmesser (12, 22) ein Frischwasservolumen abzumessen, welches über die Wasserpumpe (11, 21) in den Mischbehälter eingefüllt wird, um die Entkalkungsmittellösung zu mischen.

3. Getränkevollautomat nach Anspruch 2, bei dem die Steuerungseinrichtung ausgebildet ist, aus Messerwerten des Durchflussmessers (12, 22) auf einen Verkalkungszustand des Heißwassererzeuger (10, 20) zu schließen und bei Erreichen eines vorgegebenen Wertes, insbesondere für eine maximale Durchlaufzeit oder eine Mindestdurchflussrate, eine Meldung zu generieren, dass ein automatischer Entkalkungsvorgang erforderlich ist.

4. Getränkevollautomat nach einem der vorangehenden Ansprüche, bei dem in Flussrichtung hinter dem Heißwassererzeuger (10, 20) ein drittes Wegeventil (16, 26) angeordnet ist, mit dem der Fluidfluss von dem Heißwassererzeuger (10, 20) statt in Richtung der Brühvorrichtung (50) oder eines Getränkeauslasses (55, 56) direkt in eine Abwasserleitung oder einen Sammelbehälter geleitet werden kann.

5. Getränkevollautomat nach einem der vorangehenden Ansprüche, mit einer Steuervorrichtung (60), die programmiert ist, zur Durchführung eines automatischen Entkalkungsvorgangs die Dosierpumpe (43) anzusteuern, um eine vorbestimmte Menge an Entkalkerkonzentrat aus dem Vorratsbehälter (42) in den Mischbehälter (41) zu fördern, die weiter programmiert ist, das zweite Wegeventil (45) umzuschalten, um die Wasserpumpe (11) mit der Wasserzuleitung (47) des Mischbehälters (41) zu verbinden, und die Wasserpumpe (11, 21) anzusteuern, eine vorgebbare Menge an Trinkwasser in den Mischbehälter (41) zu fördern, und die weiter programmiert ist, das erste Wegeventil (44) umzuschalten, um die Wasserpumpe (11) saugseitig mit dem Mischbehälter (41) zu verbinden und die Entkalkungsmittellösung aus dem Mischbehälter (41) zu dem Heißwassererzeuger (10, 20) zu fördern.

6. Verfahren zum automatisierten Entkalken eines Heißwassererzeugers (10, 20) in einem Getränkevollautomaten zum Zubereiten frisch gebrühter Heißgetränke, bei dem zur Durchführung eines automatischen Entkalkungsvorgangs mittels einer Dosierpumpe (43) eine vorbestimmte Menge an flüssigem Entkalkerkonzentrat aus einem Vorratsbehälter (42) in einen Mischbehälter (41) gefördert wird, bei dem eine Wasserpumpe (11) des Getränkevollautomaten mit einer Wasserzuleitung (47) des Mischbehälters (41) verbunden wird und zum Anmischen einer Entkalkungsmittellösung mittels der Wasserpumpe (11) eine vorgebbare Menge an Trinkwasser in den Mischbehälter (41) gefördert wird und bei dem die Wasserpumpe (11) anschließend saugseitig mit dem Mischbehälter (41) verbunden und mittels der Wasserpumpe (11) die Entkalkungsmittellösung aus dem Mischbehälter (41) zu dem Heißwassererzeuger (10) gefördert wird.

## Claims

1. Fully automatic beverage machine for preparing freshly brewed hot beverages, having at least one hot water generator (10, 20), having a brewing device (50) which is suppliable with hot water from the hot water generator (10, 20), having a water pump (11, 21) which feeds drinking water from a drinking water supply line (30) to the hot water generator (10, 20), and having a flow meter (12, 22) for determining the volume of drinking water fed by the water pump (11, 21), the hot water generator (10, 20) being a continuous flow heater and the automatic beverage preparation machine being equipped with a descaling system (40) for automatic descaling of the continuous flow heater (10, 20), wherein the descaling system (40) comprises a mixing container (41) for mixing a descalant solution, a receiving space for a storage container (42) for liquid descaler concentrate, and a metering pump (43) for metered feeding of descaler concentrate from the storage container (42) to the mixing container (41) in which the descalant solution is mixed from descaler concentrate and water, the water pump (11, 21) is on the suction side switchably connectible via a first directional control valve (44) to an extraction line (49) of the mixing container (41) in order, in the switched valve position of the first directional control valve (44), to feed descalant solution from the mixing container (41) to the hot water generator (10, 20) and
the water pump (11) is on the pressure side switchably connectible via a second directional control valve (45) to a water supply line (47) of the mixing container (41) in order, in the switched valve position of second directional control valve (45), to feed drinking water to the mixing container (41) for mixing the descalant solution.

2. Fully automatic beverage machine according to claim 1, having a control device which is configured to actuate the water pump (11, 21) and to measure by means of the flow meter (12, 22) a volume of fresh water that is introduced into the mixing container via the water pump (11, 21) in order to mix the descalant solution.

3. Fully automatic beverage machine according to claim 2, wherein the control device is configured to derive a state of scaling of the hot water generator (10, 20) from meter values of the flow meter (12, 22) and, when a preset value is reached, especially for a maximum flow time or a minimum flow rate, to generate a message that an automatic descaling operation is required.

4. Fully automatic beverage machine according to any one of the preceding claims, wherein downstream of the hot water generator (10, 20) in the flow direction there is arranged a third directional control valve (16, 26) with which the flow of fluid from the hot water generator (10, 20), instead of being conducted in the direction of the brewing device (50) or a beverage outlet (55, 56), can be conducted directly into a wastewater line or a collection container.

5. Fully automatic beverage machine according to any one of the preceding claims, having a control device (60) which, for carrying out an automatic descaling operation, is programmed to actuate the metering pump (43) in order to feed a predetermined quantity of descaler concentrate from the storage container (42) to the mixing container (41); which is further programmed to switch over the second directional control valve (45) in order to connect the water pump (11) to the water supply line (47) of the mixing container (41), and to actuate the water pump (11, 21) to feed a presettable quantity of drinking water to the mixing container (41); and which is further programmed to switch over the first directional control valve (44) in order to connect the water pump (11) on the suction side to the mixing container (41) and to feed the descalant solution from the mixing container (41) to the hot water generator (10, 20).

6. Method for automatically descaling a hot water generator (10, 20) in a fully automatic beverage machine for preparing freshly brewed hot beverages, wherein for carrying out an automatic descaling operation a predetermined quantity of liquid descaler concentrate is fed by means of a metering pump (43) from a storage container (42) to a mixing container (41), wherein a water pump (11) of the fully automatic beverage machine is connected to a water supply line (47) of the mixing container (41) and, for mixing a descalant solution, a predeterminable quantity of drinking water is fed by means of the water pump (11) into the mixing container (41), and wherein the water pump (11) is then connected on the suction side to the mixing container (41) and, by means of the water pump (11), the descalant solution is fed from the mixing container (41) to the hot water generator (10).

## Revendications

1. Distributeur automatique de boissons pour la préparation de boissons chaudes fraîchement infusées, avec au moins un générateur d'eau chaude (10, 20), avec un dispositif d'infusion (50) auquel de l'eau chaude provenant du générateur d'eau chaude (10, 20) peut être amenée, avec une pompe à eau (11, 21) qui transporte de l'eau potable vers le générateur d'eau chaude (10, 20) à partir d'une conduite d'alimentation en eau potable (30), et avec un débitmètre (12, 22) pour déterminer le volume d'eau potable transporté par la pompe à eau (11, 21), dans lequel le générateur d'eau chaude (10, 20) est un chauffe-eau instantané et le distributeur automatique de boissons est équipée d'un système de détartrage (40) pour détartrer automatiquement le chauffe-eau instantané (10, 20),
dans lequel
le système de détartrage (40) comprend un récipient de mélange (41) pour mélanger une solution de détartrant, un espace de réception pour un récipient de stockage (42) pour du détartrant concentré liquide ainsi qu'une pompe de dosage (43) pour transporter de manière dosée du détartrant concentré du récipient de stockage (42) dans le récipient de mélange (41) dans lequel la solution de détartrant est mélangée à partir de détartrant concentré et d'eau,
la pompe à eau (11, 21) peut être raccordée, côté aspiration, par l'intermédiaire d'un premier distributeur (44), de manière commutable à une conduite de prélèvement (49) du récipient de mélange (41) pour transporter, dans la position commutée du premier distributeur (44), de la solution de détartrant du récipient de mélange (41) vers le générateur d'eau chaude (10, 20), et
la pompe à eau (11) peut être raccordée, côté pression, par l'intermédiaire d'un deuxième distributeur (45), de manière commutable à une conduite d'alimentation en eau (47) du récipient de mélange (41) pour transporter, dans la position commutée du deuxième distributeur (45), de l'eau potable vers le récipient de mélange (41) pour le mélange de la solution de détartrant.

2. Distributeur automatique de boissons selon la revendication 1, avec un dispositif de commande qui est conçu pour commander la pompe à eau (11, 21) et pour mesurer, au moyen du débitmètre (12, 22), un volume d'eau fraîche qui est introduit dans le récipient de mélange par l'intermédiaire de la pompe à eau (11, 21) pour mélanger la solution de détartrant.

3. Distributeur automatique de boissons selon la revendication 2, dans lequel le dispositif de commande est conçu pour déduire des valeurs mesurées par le débitmètre (12, 22) un état d'entartrage du générateur d'eau chaude (10, 20) et, lorsqu'une valeur prédéfinie est atteinte, en particulier pour un temps de passage maximum ou un débit minimum, pour générer un message indiquant qu'un processus de détartrage automatique est nécessaire.

4. Distributeur automatique de boissons selon l'une des revendications précédentes, dans lequel un troisième distributeur (16, 26) est disposé en aval du générateur d'eau chaude (10, 20) dans le sens de l'écoulement, avec lequel le flux de liquide provenant du générateur d'eau chaude (10, 20) peut, au lieu d'être dirigé vers le dispositif d'infusion (50) ou une sortie de boisson (55, 56), être dirigé directement dans une conduite d'eaux usées ou un récipient collecteur.

5. Distributeur automatique de boissons selon l'une des revendications précédentes, avec un dispositif de commande (60) qui est programmé, pour l'exécution d'un processus de détartrage automatique, pour commander la pompe de dosage (43) afin de transporter une quantité prédéterminée de détartrant concentré du récipient de stockage (42) dans le récipient de mélange (41), qui est en outre programmé pour commuter le deuxième distributeur (45) afin de raccorder la pompe à eau (11) à la conduite d'alimentation en eau (47) du récipient de mélange (41) et pour commander la pompe à eau (11, 21) afin de transporter une quantité prédéterminée d'eau potable dans le récipient de mélange (41), et qui est en outre programmé pour commuter le premier distributeur (44) afin de raccorder la pompe à eau (11) côté aspiration au récipient de mélange (41) et de transporter la solution de détartrant du récipient de mélange (41) vers le générateur d'eau chaude (10, 20).

6. Procédé de détartrage automatique d'un générateur d'eau chaude (10, 20) dans un distributeur automatique de boissons pour la préparation de boissons chaudes fraîchement infusées, dans lequel, pour exécuter un processus de détartrage automatique, une quantité prédéterminée de détartrant concentré liquide est transportée d'un récipient de stockage (42) dans un récipient de mélange (41) au moyen d'une pompe de dosage (43), dans lequel une pompe à eau (11) du distributeur automatique de boissons est raccordée à une conduite d'alimentation en eau (47) du récipient de mélange (41) et, pour le mélange d'une solution de détartrant, une quantité prédéfinissable d'eau potable est transportée dans le récipient de mélange (41) au moyen de la pompe à eau (11), et dans lequel la pompe à eau (11) est ensuite raccordée côté aspiration au récipient de mélange (41) et la solution de détartrant est transportée du récipient de mélange (41) vers le générateur d'eau chaude (10) au moyen de la pompe à eau (11).
